# EUROPÄISCHE PATENTANMELDUNG

(11) **EP 0 524 333 A1**
(43) Veröffentlichungstag der Anmeldung: **27.01.1993**
(21) Anmeldenummer: 91112439.4
(22) Anmeldetag: 24.07.1991
(51) Int. Cl.: B29C 45/14, B29C 33/00, B29C 33/52, B29C 33/12

(54) **Verfahren zur Herstellung eines gegossenen Hohlkörpers mittels eines Hohlformkerns aus nichtmetallischem Werkstoff**

(71) Anmelder: SIEMENS AKTIENGESELLSCHAFT, D-80333 München (DE)
(72) Erfinder: Götz, Siegfried, W-8630 Coburg (DE)

(57) **Zusammenfassung**

Zur einfachen Herstellung eines komplexen spritzgegossenen Hohlkörpers (1) mittels eines Hohlformkerns (2) aus nichtmetallischem Werkstoff ist erfindungsgemäß ein dünnwandiger, erst durch einen inneren Gas-Stützdruck gegenüber dem äußeren Gießdruck stabilisierbarer, jedoch bereits konturierter Hohlformkern (2) vorgesehen; es ist entweder ein dünnwandiger verlorener oder ein aus dem gegossenen Hohlkörper nach dessen Erstarren durch Rückschmelzen bzw. Rücklösen entfernbarer Hohlformkern eingesetzt.

## Beschreibung

Die Erfindung bezieht sich auf ein Verfahren zur Herstellung eines gegossenen Hohlkörpers mittels eines Hohlformkerns aus nichtmetallischem Werkstoff; Verfahren bzw. Hohlformkerne dieser Art sind durch die DE-AS-22 30 517 bzw. DE-A1-38 35 013 bekannt.

Im ersten vorgenannten bekannten Fall (DE-AS-22 30 517) wird zur Herstellung eines Hohlkörpers aus Polyurethan-Hartschaum oder massivem Polyurethan ein in sich stabiler kreisringförmiger Hohlformkern aus einem spezifisch besonders leichten PU-Hartschaum verwendet, der von außen imprägniert ist und von einem Polyurethan-Hartschaum umspritzt wird. Der von dem verlorenen Formteil umgebene Hohlraum ist in sich geschlossen und für eine betriebsmäßige Nutzung des fertig gegossenen und ausgehärteten Hohlkörpers aus Polyurethan-Hartschaum nicht vorgesehen und nicht einsetzbar.

Im zweiten vorgenannten Fall (DE-A1-38 35 013) wird zunächst aus einem thermoplastischen Werkstoff im herkömmlichen Kunststoffverarbeitungsverfahren ein Kern hergestellt, der sich nach dem Ummanteln mit technischen Kunststoffen in Wasser dispensieren und damit wieder entfernen läßt; um der Löseflüssigkeit hinreichend einen Oberflächenzugriff zu dem aufzulösenden Kern zur Verfügung stellen zu können, wird beim Herstellen des Kerns Stickstoff in dessen Schmelze eingeblasen, dann der so entstandene Hohlformkern gepreßt und gekühlt, um ihn anschließend als Hohlformkern mit einer dem Gießdruck widerstehenden Wandstärke für das Gießen des eigentlichen Hohlkörpers einsetzen zu können.

Zur Spritzguß-Herstellung komplexer Hohlkörper ist es außerdem bekannt, einen zunächst den ganzen für eine betriebsmäßige Nutzung vorgesehen inneren Hohlraum ausfüllenden Kern zu verwenden, der dann nach dem Spritzgießen und Erhärten der Gußmasse durch Rückschmelzen bzw. Rücklösen wieder entfernbar ist (Schmelzkernverfahren).

Gemäß Aufgabe vorliegender Erfindung soll ein Hohlformkern geschaffen werden, der bei der Herstellung von komplexen, für eine betriebsmäßige Nutzung, insbesondere für eine Gasdurchströmung vorgesehenen gegossenen Hohlkörpern den Nutzinhalt des Hohlkörpers als verlorener Kern nicht wesentlich einschränkt bzw. bei rückschmelzbaren bzw. rücklösenden Kernen den Aufwand an Kernmaterial und dessen Entfernung mindert.

Die Lösung dieser Aufgabe gelingt bei einem Verfahren der eingangs genannten Art durch die Lehre des Anspruchs 1; vorteilhafte Ausgestaltungen der Erfindung sind jeweils Gegenstand der Unteransprüche.

Der erfindungsgemäße Hohlformkern erhält seine Stabilität während des Gießvorganges des Hohlkörpers durch den inneren Gas-Stützdruck, so daß die eigentliche Wandung des Hohlformkerns nicht zur Stabilität des Kerns beim Gießvorgang beitragen muß und somit mit einer derart dünnen Wandstärke ausführbar ist, daß der eigentliche betriebsmäßig für eine Nutzung vorgesehene Hohlraum des gegossenen Hohlkörpers durch einen verlorenen Formkern nicht merklich eingeschränkt wird bzw. bei einem rückschmelzenden bzw. rücklösenden Kern nur ein geringer Material- bzw. Arbeitsaufwand entsteht.

Zur Sicherung einer hinreichenden Wandstärke des gegossenen Hohlkörpers ist der dünnwandige verlorene Hohlformkern an seiner Außenwandung mit Abstands-Stützstücken zur äußeren Spritzform der Gießanlage auf Distanz gehalten, wobei als besondere Ausgestaltung der Erfindung als Abstands-Stützstücke einstückig an den dünnwandigen Hohlformkern angeformte, ebenfalls durch den inneren Gas-Stützdruck stabilisierbare Abstütz-Noppen vorgesehen sind.

Beim Gießen des Hohlkörpers wird zweckmäßigerweise der innere Gas-Stützdruck dem jeweiligen Spritzdruck angepaßt, derart daß ein Ausbeulen des dünnwandigen Hohlformkerns bei zu großem Innen-Stützdruck bzw. zu geringem Gießaußendruck und andererseites ein Einbeulen bei zu geringem Innen-Stützdruck bzw. zu großem Außengießdruck vermeidbar ist.

Die Erfindung sowie weitere vorteilhafte Ausgestaltungen der Erfindung gemäß Merkmalen der Unteransprüche wird im folgenden anhand eines schematisch dargestellten Ausführungsbeispiels in der Zeichnung näher erläutert; darin zeigen:
- FIG 1: im Schnittbild gemäß Schnittverlauf I-I in FIG 2 ein Luftführungsgehäuse für ein Ansaugsystem in einem Kraftfahrzeug-Motor.
- FIG 2: im Teilschnitt das Luftführungsgehäuse gemäß FIG 1 im Schnittverlauf II-II bzw. in Draufsicht das Luftführungsgehäuse gemäß FIG 1.

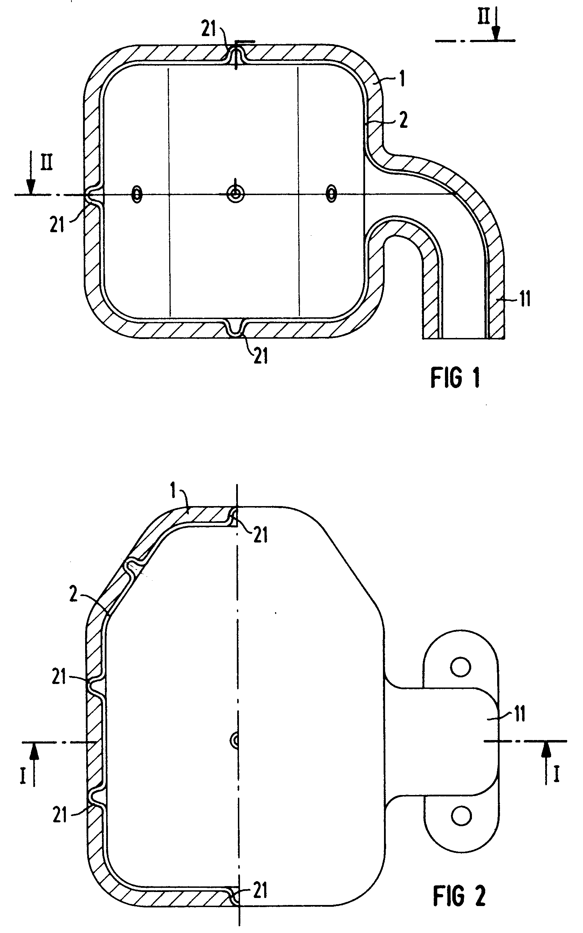

FIG 1,2 zeigen als spritzgegossener Hohlkörper 1 ein Luftführungsgehäuse für ein Ansaugsystem eines Kraftfahrzeug-Motors mit einem seitlich abgehenden gebogenen Anschlußkrümmer 11 als derart komplexen Hohlkörper, so daß dessen Herstellung nur mit einem verlorenen oder nach dem Erhärten der Spritzgußmasse rückschmelzbaren bzw. rücklösbaren Hohlformkern möglich ist. Der erfindungsgemäße verlorene Hohlformkern 2 besteht aus einem äußerst dünnwandigen Folienkörper aus Thermoplast, insbesondere wärmestabilem PETP-Werkstoff, dessen Stabilität beim Gießvorgang erst durch einen inneren Gas-Stützdruck gewährleistet ist.

Der entsprechend der Form des zu gießenden Hohlkörpers konturierte Formkern ist - wie z.B. durch Trennungslinien zwischen einer oberen und einer unteren Hälfte angedeutet - aus zwei einfach formbaren mit lediglich in senkrechter Richtung einfach ziehbaren Formkernen entsprechend zusammengesetzt.

Zur Sicherung einer hinreichenden Wandstärke des spritzgegossenen Hohlkörpers 1 sind einstückig an die dünne Wand des verlorenen Hohlformkerns 2 Abstütz-Noppen 21 derart angeformt, daß sie durch den stabilisierenden Gas-Stützdruck im Hohlraum des verlorenen Hohlformkerns in Form von stabilisierten Distanzstücken an die innere Wandung der hier nicht dargestellten äußeren Spritzgußform angedrückt sind.

Der im Innenraum des verlorenen Hohlformkerns 2 gegen den Druck der Spritzgußmasse des Hohlkörpers 1 notwendige Gas-Stützdruck wird nach einer Ausgestaltung der Erfindung mit Hilfe einer an sich bekannten für ein Gasinjektion-Verfahren vorgesehnen Anlage erreicht und zweckmäßigerweise der Druckverlauf des Gas-Stützdruckes in Anpassung an den jeweiligen Spritzdruck geregelt wird.

## Patentansprüche

1. Verfahren zur Herstellung eines gegossenen Hohlkörpers (1), insbesondere aus Thermoplast, mittels eines Hohlformkerns aus nichtmetallischem Werkstoff, **gekennzeichnet durch** Verwendung eines dünnwandigen, während des Gießens des Hohlkörpers (1) erst durch einen inneren Gas-Stützdruck gegenüber dem äußeren Gießdruck stabilisierten, entsprechend der Form des Hohlkörpers (1) konturierten Hohlformkerns (2).

2. Verfahren nach Anspruch 1 , **dadurch gekennzeichnet,** daß Abstands-Stützstücke zwischen dem Außenmantel des dünnwandigen Formkerns (2) und dem Innenmantel der Außengießform angeordnet werden.

3. Verfahren nach Anspruch 2, **dadurch gekennzeichnet,** daß als Abstands-Stützstücke einstückig an den dünnwandigen Hohlformkern (2) angeformte, ebenfalls durch den inneren Gas-Stützdruck stabilisierbare Abstütz-Noppen (21) vorgesehen werden.

4. Verfahren nach einem der Ansprüche 1-3, **dadurch gekennzeichnet,** daß der dünnwandige Hohlformkern (2) nach dem Erstarren der Gußmasse als verlorener Kern in dem Hohlkörper (1) verbleibt.

5. Verfahren nach einem der Ansprüche 1-3, **dadurch gekennzeichnet,** daß der dünnwandige Hohlformkern nach dem Erstarren der Gußmasse aus dem Hohlkörper durch Rückschmelzen bzw. Rücklösen entfernt wird.

6. Verfahren nach einem der Ansprüche 1-5, **dadurch gekennzeichnet,** daß der dünnwandige Hohlformkern (2) aus mehreren gegossenen, in einfacher Weise nach dem Gießen entformbaren Hohlformkernteilen zusammengesetzt wird.

7. Verfahren nach einem der Ansprüche 1-6, **dadurch gekennzeichnet,** daß mehrere dünnwandige Hohlformkerne jeweils zu einem Gesamt-Hohlformkern zusammengesetzt werden.

8. Verfahren nach einem der Ansprüche 1-7, **dadurch gekennzeichnet,** daß der Hohlformkern (2) aus PETP-Material gebildet wird.

9. Verfahren nach einem der Ansprüche 1-8, **dadurch gekennzeichnet,** daß der Gas-Stützdruck des dünnwandigen Hohlformkerns dem jeweiligen Gießdruck bzw. der äußeren Druckbelastung durch den Hohlkörper (1) angepaßt wird.

10. Verfahren nach Anspruch 10, **dadurch gekennzeichnet,** daß der Gas-Stützdruck mittels einer für das Gas-Injektion-Verfahren an sich vorgesehenen Vorrichtung aufgebracht bzw. geregelt wird.
